# EUROPEAN PATENT SPECIFICATION

(11) **EP 3 096 430 B1**
(45) Date of publication and mention of the grant of the patent: **11.10.2023**
(21) Application number: 14869200.7
(22) Date of filing: 28.11.2014
(51) Int. Cl.: H02J 7/00, B60L 53/16

(54) **ELECTRIC VEHICLE AND POWER SUPPLY CIRCUIT FOR A VEHICLE CONTROL DEVICE WITH ALTERNATING CURRENT CHARGING THEREOF**
ELEKTROFAHRZEUG UND STROMVERSORGUNGSSCHALTUNG FÜR EIN FAHRZEUGSTEUERUNGSGERÄT MIT WECHSELSTROMLADUNG
VÉHICULE ÉLECTRIQUE ET CIRCUIT D'ALIMENTATION POUR UN DISPOSITIF DE COMMANDE DE VÉHICULE AVEC CHARGE EN COURANT ALTERNATIF

(30) Priority: 13.12.2013 CN 201310681085
(43) Date of publication of application: 23.11.2016
(73) Proprietor: Yutong Bus Co., LTD., Zhengzhou, Henan 450061 (CN)
(72) Inventor: WANG, Yongqiu, Zhengzhou Henan 450016 (CN); PENG, Nengling, Zhengzhou Henan 450016 (CN); LI, Yurui, Zhengzhou Henan 450016 (CN); ZHANG, Yongqiang, 450016 Henan 450016 (CN); LI, Xingjia, Zhengzhou Henan 450016 (CN); QIN, Zirui, Zhengzhou Henan 450016 (CN); ZHOU, Haiyang, Zhengzhou Henan 450016 (CN); QI, Ying, Zhengzhou Henan 450016 (CN); FENG, Junqiang, Zhengzhou Henan 450016 (CN)
(74) Representative: Gulde & Partner
(86) International application number: PCT/CN2014/092514
(87) International publication number: WO 2015/085869

(56) References cited:
- WO-A1-2013/041049
- CN-A- 102 868 188
- CN-A- 103 023 076
- CN-A- 103 701 166
- CN-U- 202 856 417
- CN-U- 203 734 328
- JP-A- 2013 046 477
- JP-U- H0 677 140
- US-A- 3 121 189

## Description

### TECHNICAL FIELD

The present invention belongs to the field of electronic control technology and, more particularly, relates to an electrical vehicle and a power supply circuit for a vehicle control device with alternating current (AC) charging thereof.

### BACKGROUND ART

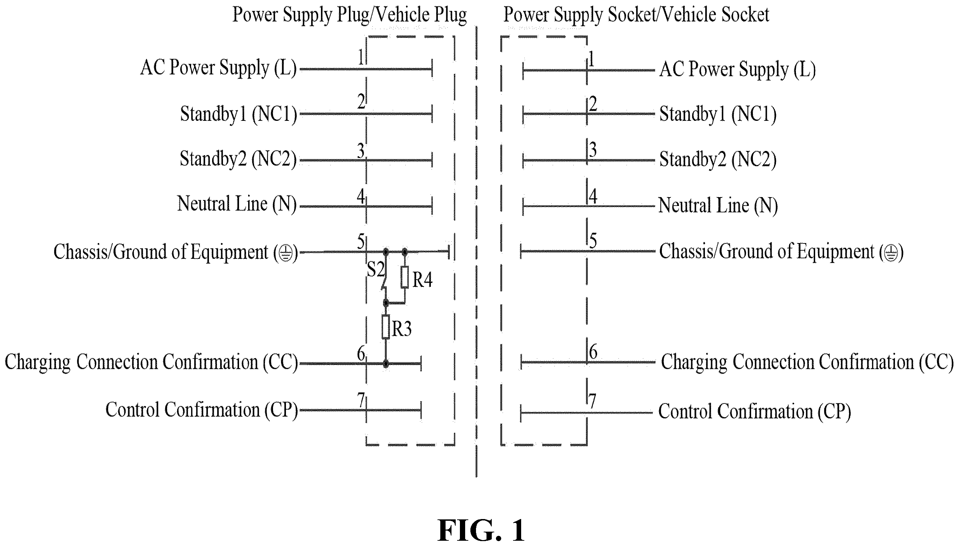

GBfT 20234.2-2011 "Connection set for conductive charging of electric vehicles -Part 2: AC charging coupler" has been released. The charging connection interface is shown as Fig.1. During the charging connection, first of all, the protection ground contact is connected, and lastly, the control confirmation contact and the charging connection confirmation contact are connected. During the disconnection, firstly, the control confirmation contact and the charging connection confirmation contact are disconnected, and lastly, the protection ground contact is disconnected.

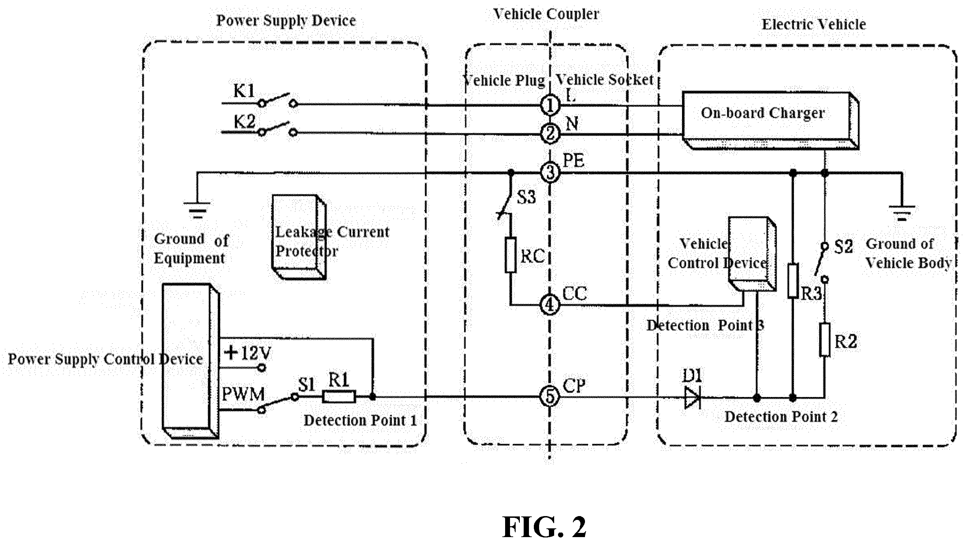

When an electric vehicle is charged with the charging mode 3, the control guiding circuit as shown in Fig. 2 is used as a judging device for connection states of the charging connection device and the rated current parameter. The circuit is constituted with a power supply control device, resistors R1, R2, R3, and RC, a diode D1, switches S1, S2, and S3, an on-board charger, and a vehicle control device. The vehicle control device could be integrated into the on-board charger. The switch S1 is an inner switch of a power supply device. The resistor RC is mounted on the power supply plug and the vehicle plug. The switch S3 is an inner switch of the power supply plug or the vehicle plug and is cooperated with the push button (for triggering a mechanical locking device) on the plug. When the button is pressed, the function of mechanical locking can be released, and the switch S3 is in the disconnection state. The switch S2 is an inner switch of the vehicle control device. After the vehicle coupler is in full connection, if the on-board charger is in a non-fault condition, after completing the self-detection and the batteries are in a chargeable state, the switch S2 is in a close state (if the vehicle is provided with a charging request function or a charging control function, it should meanwhile be satisfied that the vehicle is in the "charging request" or "chargeable" state). During the charging, the vehicle control device can monitor the voltage level at the detection point 3 and the PWM signal duty cycle of the detection point 2.

As the charging coupler CC (charging connection confirmation), CP (control confirmation) prescribed in the standard are both driven with signals, the driving capacity thereof is poor and could not supply power to the vehicle control device. If a vehicle battery supplies power to the vehicle control device directly, the leakage current is large in the non-charging state, and the vehicle is lack of electricity in long term unused state. It is mainly resolved by manual power supply now. WO2013/041049A1 discloses an in vehicle charging control device, a vehicle charging system and a vehicle.

### SUMMARY

The present invention aims to provide a power supply circuit for a vehicle control device with AC charging of an electric vehicle, so as to resolve the technical problem that the current electric vehicle control device needs to be manually supplied with power. At the same time, an electric vehicle using the power supply circuit can be provided.

The invention is set out in the appended set of claims.

To achieve the above aim, the technical solution used by the power supply circuit for the vehicle control device with AC chaiging of an electric vehicle in the present invention is: a CC signal detection and amplification circuit for being connected with the vehicle plug and the vehicle control device, a relay and a relay control circuit for controlling the relay are included. The CC signal detection and amplification circuit includes three terminals: an input terminal, a power supply terminal and an output terminal. The input terminal is used to be connected with the CC terminal of the vehicle plug. The power supply terminal is connected with the low voltage on-board power supply through a first contact of the relay. The output terminal is connected with and powers to the said relay control circuit. The said low voltage on-board power supply is connected with and powers to the said relay control circuit and the power supply terminal of said vehicle control device through a second contact. A relay coil is provided in series in the relay control circuit. The said relay coil is used for controlling the switching of the first contact and the second contact. Said relay control circuit is also used for being connected with the control terminal of the vehicle control device, so as to control the relay control circuit disconnected under the condition of detecting that the vehicle plug is pulled off to cause the CC terminal to be turned off, wherein the power supply circuit is configured such that after the relay is closed, no voltage or current is supplied to the CC signal detection and amplification circuit, but the sampling of CC signal is not affected.

Said CC signal detection and amplification circuit employs a triode Q1. The base of the triode Q1 is used to be connected with the vehicle plug and the vehicle control device, the emitter is connected with the first contact of the relay, and the collector is connected with the relay control circuit.

Said relay control circuit is used to be connected with the control terminal of the vehicle control device through a triode Q2 provided in series in the relay control circuit. One terminal of the relay coil is used to be connected with the power supply terminal of the vehicle control device and the collector of the triode Q1, and the other terminal is connected with the collector of the triode Q2. The base of the triode Q2 is used to be connected with the control output terminal of the vehicle control device, and the emitter is connected to the ground.

A free-wheeling diode D23 and the said relay coil are in parallel connection.

The said relay coil is connected with the collector of the triode Q1 through a diode D22, and used to be connected with the power supply terminal of the vehicle control device through a diode D21.

The technical solution employed with the electric vehicle in the present invention is that a vehicle control device is included. The power supply circuit for the vehicle control device with AC charging is connected to the said vehicle control device. Said power supply circuit for the vehicle control device with AC charging includes a CC signal detection and amplification circuit for being connected with the vehicle plug and the vehicle control device, a relay and a relay control circuit for controlling the relay. The CC signal detection and amplification circuit includes three terminals: an input terminal, a power supply terminal and an output terminal. The input terminal is used to be connected with the CC terminal of the vehicle plug. The power supply terminal is connected with the low voltage on-board power supply through the first contact of the relay. The output terminal is connected with and powers to the said relay control circuit. The said low voltage on-board power supply is connected with and powers to the said relay control circuit and the power supply terminal of said vehicle control device through the second contact. A relay coil is provided in the relay control circuit in series. Said relay coil is used for controlling the switching of the first contact and the second contact. Said relay control circuit is also used for being connected with the control terminal of the vehicle control device, so as to control the relay control circuit disconnected under the condition of detecting that the vehicle plug is pulled off to cause the CC terminal to be turned off, wherein the power supply circuit is configured such that after the relay is closed, no voltage or current is supplied to the CC signal detection and amplification circuit, but the sampling of CC signal is not affected.

Said CC signal detection and amplification circuit employs a triode Q1. The base of the triode Q1 is used to be connected with the vehicle plug and the vehicle control device, the emitter is connected with the first contact of the relay, and the collector is connected with the relay control circuit.

Said relay control circuit is used to be connected with the control terminal of the vehicle device through the triode Q2 provided in the relay control circuit in series. One terminal of the relay coil is used to be connected with the power supply terminal of the vehicle control device and the collector of the triode Q1, and the other terminal is connected with the collector of the triode Q2. The base of the triode Q2 is used to be connected with the control output terminal of the vehicle control device, and the emitter is connected to the ground.

A free-wheeling diode D23 and the said relay coil are in parallel connection.

The said relay coil is connected with the collector of the triode Q1 through a diode D22, and used to be connected with the power supply terminal of the vehicle control device through a diode D21.

The electric vehicle and the power supply circuit for the vehicle control device with AC charging thereof include a CC signal detection and amplification circuit, a relay and a relay control circuit for controlling the relay. The CC signal of the vehicle charging plug is amplified by the CC signal detection and amplification circuit, and the relay contacts are driven to turn on the power supply terminal of the vehicle control device. Self-lock powering is achieved by the relay control circuit. After it is detected that the vehicle charging plug is turned off, the relay control circuit is turned off and charging is stopped. In the circuit, the relay control circuit is turned off in the case of no charging, and the vehicle control device cannot consume power without power supply. When the charging plug is inserted, the vehicle control device is supplied power with the tumed-on relay. The automatic power supply control of the vehicle control device is achieved without the affection of sampling the charging connection confirmation signal CC, so as to reduce manual operation and improve the operation efficiency and the safety under charging.

Furthermore, the providing of the free-wheeling diode achieves self-lock powering and prevents the relay from jittering repeatedly.

### BRIEF DESCRIPTION OF THE DRAWINGS

Fig.1 is the structural schematic of the charging connection interface in GBfT 20234.2-201.
Fig.2 is the control guiding circuit diagram of the charging mode 3 in GB/T 20234.2-201.
Fig. 3 is the principle diagram of the power supply circuit according to the present invention.

### DETAILED DESCRIPTION OF THE EMBODIMENTS

The present invention is further described in reference with the drawings and the detailed embodiments in the following.

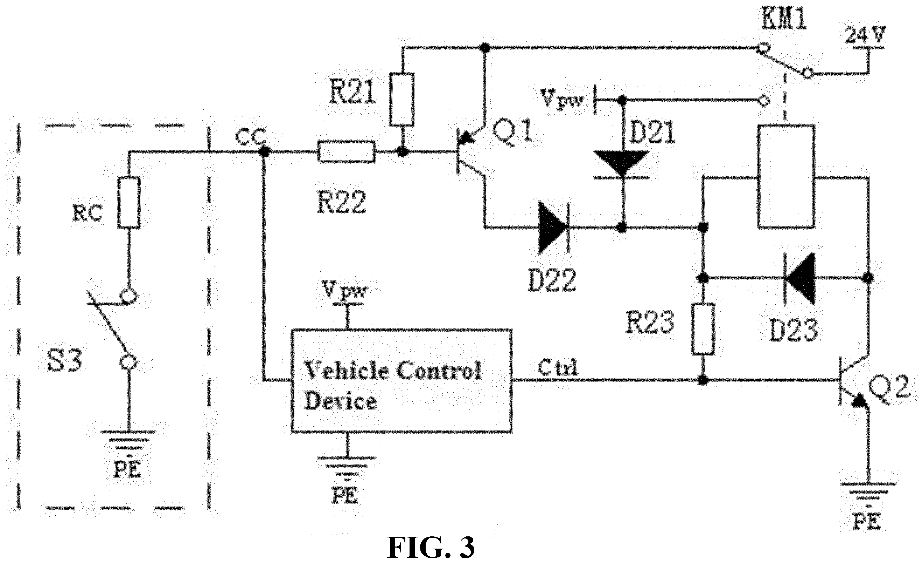

Fig.3 shows a principle diagram of the power supply circuit for the AC charging vehicle control device of an electric vehicle according to the present invention. It is can be seen from the figure, the circuit includes a CC signal detection and amplification circuit for being connected with the vehicle plug and the vehicle control device, a relay and a relay control circuit for controlling the relay. The CC signal detection and amplification circuit includes three terminals: an input terminal, a power supply terminal and an output terminal. The input terminal is used to be connected with the CC terminal of the vehicle plug. The power supply terminal is connected with the low voltage on-board power supply through a first contact of the relay. The output terminal is connected with and powers to the said relay control circuit. The low voltage on-board power supply is connected with and powers to the said relay control circuit and the power supply terminal of said vehicle control device through a second contact. A relay coil is provided in series in the relay control circuit. The relay coil is used for controlling the switching of the first contact and the second contact. The relay control circuit is also used for being connected with the control terminal of the vehicle control device, so as to control the relay control circuit disconnected under the condition of detecting that the vehicle plug is pulled off to cause the CC terminal to be turned off.

The CC signal detection and amplification circuit in the present embodiment employs a triode Q1. The base of the triode Q1 is used to be connected with the vehicle plug and the vehicle control device, the emitter is connected with the first contact of the relay, and the collector is connected with the relay control circuit. Of course, a MOSFET, an optical relay and the devices with similar functions can be also used.

The relay control circuit is used to be connected with the control terminal of the vehicle control device through a triode Q2 provided in series in the relay control circuit. One terminal of the relay coil is used to be connected with the power supply terminal of the vehicle control device and the collector of the triode Q1, and the other terminal is connected with the collector of the triode Q2. The base of the triode Q2 is used to be connected with the control output terminal of the vehicle control device, and the emitter is connected to the ground.

A freewheeling diode D23 is connected and the said relay coil are in parallel connection. The relay coil is connected with the collector of the triode Q1 through a diode D22, and meanwhile used to be connected with the power supply terminal of the vehicle control device through a diode D21.

An electric vehicle is also provided in the present invention, and includes a vehicle control device and a power supply circuit for the AC charging vehicle control device. The structure of said power supply circuit for the AC charging vehicle control device is described as above.

As shown in Fig.3, S3, RC in the dotted box are the inner circuit of the charging plug. R21, R22, and R23 are resistors. D21, D22 and D23 are diodes. KM1 is a relay. 24V is a low voltage on-board power supply (a vehicle battery). Vpw is the power supply terminal of the vehicle control device outputted from the circuit. PE is connected to the ground of vehicle body in the present circuit. The charging connection confirmation signal CC is connected with the base of the PNP type triode Q1 through R22. Both terminals of the resistor R21 are connected with the emitter and the base of Q1 (i.e., the above first contact). The emitter of Q1 is connected with the normally closed contact of the relay. The collector is connected with one terminal of the coil of the relay KM1. The relay KM1 is connected with the 24V low voltage onboard power supply through the normally opened contact (i.e., the above second contact), so as to supply the vehicle control device with power. The other terminal of the relay coil is connected to the ground through a PNP type triode Q2. The base of the triode Q2 is connected with the cathode of D23 through R23. The base of the triode Q2 is meanwhile connected with the vehicle control unit. The anodes of D21 and D22 are respectively connected with Vpw and the collector of the triode Q1, and the cathodes are connected to supply positive control signals to the relay. D23 is the free-wheeling diode of the coil of the relay KM 1.

The operation principle of the power supply circuit for the AC charging vehicle control device of an electric vehicle in the present invention is as follows: under the normal operation state the control terminal Ctrl of the vehicle control device is in a high-resistance state. When the charging plug is inserted, the CC terminal signal pulls down the base of the triode Q1 through the resistor R22, and Q1 is turned on, the relay KM1 is controlled to be closed, the power supply terminal Vpw is powered on after KM1 is being closed. The relay KM1 is self-locked so as to supply power to the vehicle control unit continuously. After the relay is closed, no voltage or current is supplied to R21, R22, and Q1, but the sampling of CC signal could not be affected. When the vehicle plug is pulled off, the vehicle control device detects that the CC terminal is turned off, the control terminal Ctrl outputs a low edge signal, the triode Q2 is turned off, the contacts of the relay KM 1 is released, and Vpw is powered off, so that the vehicle control device stops operation.

The power supply circuit of the present invention is designed for Fig. A. 3 of GBT202342-2011. Other connection means could also achieve to supply power to the control device in this way. The power supply circuit can both be independently designed and be integrated into the inside of the vehicle control device.

## Claims

1. A power supply circuit for a vehicle control device of an AC charging electric vehicle, wherein the power supply circuit comprises a charging connection confirmation, CC, signal detection and amplification circuit configured to be connected with a CC terminal of a vehicle charging plug and the vehicle control device, a relay (KM1) and a relay control circuit for controlling the relay (KM1); wherein the relay coil is connected in series with the relay control circuit;
wherein said CC signal detection and amplification circuit comprises a triode Q 1, the base of the triode Q1 is configured to be connected with the CC terminal of the vehicle charging plug and the vehicle control device, the emitter is connected with a first contact of the relay (KM1);
the relay (KM1) comprises three power terminals: a power input terminal, the first contact and a second contact as two output terminals, wherein the first contact is a normally closed contact and the second contact is a normally open contact,
the relay is configured to switch a low voltage on-board power supply received on the power input terminal between the two output terminals; the second contact is connected with a first terminal of the relay coil and a power supply terminal (Vpw) of the vehicle control device; the first terminal of the relay coil is connected with the collector of the triode Q1, the other terminal of the relay coil is grounded through triode Q2, the base of the triode Q2 is configured to be connected with a control terminal of the vehicle control device;
the power supply circuit being configured such that when a vehicle charging plug is inserted, a signal on the CC terminal pulls down the base of the triode Q1, the triode Q 1 is turned on, the relay coil is energized through the first contact, the relay (KM1) is controlled to switch the low voltage on-board power supply to the second contact, the power supply terminal (Vpw) and the relay coil is energized through the second contact, the relay (KM1) is self-locked;
when the vehicle charging plug is pulled off, the vehicle control device detects that the CC terminal is disconnected, and controls the triode Q2 to turn off by outputting a signal to the base of the triode Q2, then the relay coil is de-energized, the relay switches to the first contact, and the vehicle control device is de-energized.

2. The power supply circuit according to claim 1, **characterized in that** a free-wheeling diode D23 and the said relay coil are in parallel connection.

3. The power supply circuit according to claim 1 or claim 2, **characterized in that** the first terminal of relay coil is connected with the collector of the triode Q1 through a diode D22, and configured to be connected with the power supply terminal of the vehicle control device through a diode D21.

4. An electric vehicle, including a vehicle control device, **characterized in that** the power supply circuit according to any one of claims 1-3 is connected to the said vehicle control device.

## Patentansprüche

1. Stromversorgungsschaltung für eine Fahrzeugsteuerungsvorrichtung eines Wechselstromlade-Elektrofahrzeugs, wobei die Stromversorgungsschaltung eine Ladeverbindungsbestätigungs-, CC-, Signalerfassungs-und -verstärkungsschaltung, die so konfiguriert ist, dass sie mit einem CC-Anschluss eines Fahrzeugladesteckers und der Fahrzeugsteuerungsvorrichtung verbunden ist, ein Relais (KM1) und eine Relaissteuerungsschaltung zum Steuern des Relais (KM1) umfasst, wobei die Relaisspule in Reihe mit der Relaissteuerungsschaltung geschaltet ist,
wobei die besagte CC-Signalerfassungs- und -verstärkungsschaltung eine Triode Q1 umfasst, wobei die Basis der Triode Q1 so konfiguriert ist, dass sie mit dem CC-Anschluss des Fahrzeugladesteckers und der Fahrzeugsteuerungsvorrichtung verbunden ist, wobei der Emitter mit einem ersten Kontakt des Relais (KM1) verbunden ist;
das Relais (KM1) drei Stromanschlüsse umfasst: einen Stromeingangsanschluss, den ersten Kontakt und einen zweiten Kontakt als zwei Ausgangsanschlüsse, wobei der erste Kontakt ein normalerweise geschlossener Kontakt und der zweite Kontakt ein normalerweise offener Kontakt ist, wobei das Relais konfiguriert ist, um eine Niederspannungs-Bordstromversorgung, die an dem Stromeingangsanschluss empfangen wird, zwischen den zwei Ausgangsanschlüssen zu schalten; wobei der zweite Kontakt mit einem ersten Anschluss der Relaisspule und einem Stromversorgungsanschluss (Vpw) der Fahrzeugsteuerungsvorrichtung verbunden ist;
der erste Anschluss der Relaisspule mit dem Kollektor der Triode Q1 verbunden ist, der andere Anschluss der Relaisspule über die Triode Q2 geerdet ist, wobei die Basis der Triode Q2 so konfiguriert ist, dass sie mit einem Steueranschluss der Fahrzeugsteuerungsvorrichtung verbunden werden kann;
die Stromversorgungsschaltung so konfiguriert ist, dass,
wenn ein Fahrzeugladestecker eingesteckt wird, ein Signal am CC-Anschluss die Basis der Triode Q1 herunterzieht, die Triode Q1 eingeschaltet wird, wobei die Relaisspule über den ersten Kontakt erregt wird, wobei das Relais (KM1) so gesteuert wird, dass es die Niederspannungs-Bordstromversorgung auf den zweiten Kontakt schaltet, wobei der Stromversorgungsanschluss (Vpw) und die Relaisspule über den zweiten Kontakt erregt werden, wobei das Relais (KM1) selbstsichernd ist;
wenn der Fahrzeugladestecker abgezogen wird, die Fahrzeugsteuerungsvorrichtung erfasst, dass der CC-Anschluss getrennt ist, und die Triode Q2 steuert, um sich auszuschalten, indem sie ein Signal an die Basis der Triode Q2 ausgibt, wobei dann die Relaisspule stromlos wird, wobei das Relais auf den ersten Kontakt umschaltet und die Fahrzeugsteuerungsvorrichtung stromlos wird.

2. Stromversorgungsschaltung nach Anspruch 1, **dadurch gekennzeichnet, dass** eine Freilaufdiode D23 und die besagte Relaisspule parallel geschaltet sind.

3. Stromversorgungsschaltung nach Anspruch 1 oder Anspruch 2, **dadurch gekennzeichnet, dass** der erste Anschluss der Relaisspule über eine Diode D22 mit dem Kollektor der Triode Q1 verbunden ist und so konfiguriert ist, dass er über eine Diode D21 mit dem Stromversorgungsanschluss der Fahrzeugsteuerung verbunden ist.

4. Elektrofahrzeug, umfassend eine Fahrzeugsteuerungsvorrichtung, **dadurch gekennzeichnet, dass** die Stromversorgungsschaltung nach einem der Ansprüche 1 bis 3 mit der besagten Fahrzeugsteuerungsvorrichtung verbunden ist.

## Revendications

1. Circuit d'alimentation électrique pour un dispositif de commande de véhicule d'un véhicule électrique à charge en courant alternatif, dans lequel le circuit d'alimentation électrique comprend un circuit de détection et d'amplification de signal de confirmation de connexion de charge, CC, configuré pour être connecté à une borne CC d'une prise de chargement de véhicule et au dispositif de commande de véhicule, un relais (KM1) et un circuit de commande de relais pour commander le relais (KM1) dans lequel la bobine de relais est connectée en série avec le circuit de commande de relais;
dans lequel ledit circuit de détection et d'amplification de signal CC comprend une triode Q1, la base de la triode Q1 étant configurée pour être connectée à la borne CC de la prise de chargement de véhicule et au dispositif de commande de véhicule, l'émetteur étant connecté à un premier contact de relais (KM1);
le relais (KM1) comprenant trois bornes d'alimentation : une borne d'entrée d'alimentation, le premier contact et un deuxième contact en tant que deux bornes de sortie, le premier contact étant un contact normalement fermé et le deuxième contact un contact normalement ouvert, le relais étant configuré pour commuter une alimentation de bord à basse tension reçue sur la borne d'entrée d'alimentation entre les deux bornes de sortie ; le deuxième contact étant connecté à une première borne de la bobine de relais et à une borne d'alimentation (Vpw) du dispositif de commande de véhicule ;
la première borne de la bobine de relais étant connectée au collecteur de la triode Q1, l'autre borne de la bobine de relais étant mise à la terre par l'intermédiaire de la triode Q2, la base de la triode Q2 étant configurée pour être connectée à une borne de commande du dispositif de commande de véhicule ;
le circuit d'alimentation électrique étant configuré de telle sorte que
lorsqu'une prise de chargement de véhicule est insérée, un signal sur la borne CC tire vers le bas la base de la triode Q1, la triode Q1 est allumée, la bobine de relais étant alimentée par le premier contact, le relais (KM1) étant commandé pour commuter l'alimentation de bord à basse tension sur le deuxième contact, la borne d'alimentation (Vpw) et la bobine de relais étant alimentées par le deuxième contact, le relais (KM1) étant autobloquant ;
lorsque la prise de chargement de véhicule est débranchée, le dispositif de commande de véhicule détecte que la borne CC est déconnectée et commande la désactivation de la triode Q2 en émettant un signal à la base de la triode Q2, puis la bobine de relais cesse d'être alimentée, le relais passant au premier contact et le dispositif de commande de véhicule cessant d'être alimenté.

2. Circuit d'alimentation électrique selon la revendication 1, **caractérisé en ce qu'**une diode de roue libre D23 et ladite bobine de relais sont en connexion parallèle.

3. Circuit d'alimentation électrique selon la revendication 1 ou la revendication 2, **caractérisé en ce que** la première borne de la bobine de relais est reliée au collecteur de la triode Q1 par l'intermédiaire d'une diode D22, et configurée pour être reliée à la borne d'alimentation du dispositif de commande de véhicule par l'intermédiaire d'une diode D21.

4. Véhicule électrique, comprenant un dispositif de commande de véhicule, **caractérisé en ce que** le circuit d'alimentation électrique selon l'une quelconque des revendications 1 à 3 est connecté audit dispositif de commande de véhicule.
